# EUROPÄISCHE PATENTANMELDUNG

(11) **EP 2 174 615 A1**
(43) Veröffentlichungstag der Anmeldung: **14.04.2010**
(21) Anmeldenummer: 08017761.1
(22) Anmeldetag: 10.10.2008
(51) Int. Cl.: A61C 1/08, A61C 1/00

(54) **Medizinische, insbesondere dentale, Behandlungsvorrichtung**

(71) Anmelder: W & H Dentalwerk Bürmoos GmbH, 5111 Bürmoos (AT)
(72) Erfinder: Rothenwänder, Michael, 5112 Lamprechtshausen (AT); Kment, Christoph, 1130 Wien (AT); Kölndorfer, Jürgen, 1100 Wien (AT); Weissenböck, Herbert, 2873 Feistritz (AT); Milojkovic, Martin, 1090 Wien (AT)
(74) Vertreter: Benda, Ralf

(57) **Zusammenfassung**

Es wird eine medizinische, insbesondere dentale, Behandlungsvorrichtung (1) offenbart, die umfasst: Eine in Bewegung versetzbare Antriebseinheit zum Antrieb eines mit der Antriebseinheit verbindbaren oder verbundenen, auf eine Behandlungsstelle einwirkenden Werkzeugs, eine Lichtabgabevorrichtung (2) zur Abgabe von Licht auf das Werkzeug und / oder die Behandlungsstelle, wobei die Lichtabgabevorrichtung (2) bevorzugt zumindest ein optisches Halbleiterelement umfasst, eine Kühlmedienabgabevorrichtung (3) zur Abgabe zumindest eines Kühlmediums auf das Werkzeug und / oder die Behandlungsstelle, und eine Steuervorrichtung (4) zur alternierenden Abgabe von Licht und des zumindest einen Kühlmediums. Die alternierenden, gepulste Abgabe von Licht und des zumindest einen Kühlmediums ermöglicht eine bessere Sicht des Anwenders auf die Behandlungsstelle.

## Beschreibung

Die vorliegende Erfindung betrifft eine medizinische, insbesondere dentale, Behandlungsvorrichtung gemäß dem Oberbegriff des Anspruchs 1.

Aus dem Stand der Technik, zum Beispiel aus der Patentschrift DE 195 11 262 C1, sind seit langem medizinische, insbesondere dentale, Behandlungsvorrichtungen bekannt, die über einen Antrieb für ein mit der Behandlungsvorrichtung verbindbares Werkzeug, eine Lichtabgabevorrichtung zur Abgabe von Licht auf das Werkzeug und / oder die Behandlungsstelle und eine Kühlmedienabgabevorrichtung zur Abgabe zumindest eines Kühlmediums auf das Werkzeug und / oder die Behandlungsstelle verfügen.

Als Kühlmedien werden häufig eine Flüssigkeit, insbesondere Wasser, und ein Druckgas, üblicherweise Druckluft, verwendet. Durch die Abgabe der unter Druck stehenden Kühlmedien in das Raumvolumen über der Behandlungsstelle, durch deren Auftreffen auf die Behandlungsstelle und / oder das Werkzeug und durch deren Abprallen und Versprühen von der Behandlungsstelle und / oder dem Werkzeug entsteht an und um die Behandlungsstelle ein nebelartiger Vorhang, der die Übertragung des von der Lichtabgabevorrichtung in Richtung der Behandlungsstelle emittierten Lichts aufgrund von Streuungs-, Brechungs- oder Absorptionseffekten und damit die Sicht des Anwenders auf die Behandlungsstelle behindert.

Der vorliegenden Erfindung liegt daher die Aufgabe zugrunde eine Behandlungsvorrichtung zu schaffen, die diese Nachteile nicht aufweist und die insbesondere eine bessere Sicht des Anwenders auf die Behandlungsstelle zulässt.

Diese Aufgabe wird gemäß einem Ausführungsbeispiel durch eine medizinische, insbesondere dentale, Behandlungsvorrichtung gelöst, die eine in Bewegung versetzbare Antriebseinheit zum Antrieb eines mit der Antriebseinheit verbindbaren oder verbundenen, auf eine Behandlungsstelle einwirkenden Werkzeugs, eine Lichtabgabevorrichtung zur Abgabe von Licht in Richtung des Werkzeugs und / oder der Behandlungsstelle oder auf das Werkzeug und / oder die Behandlungsstelle und eine Kühlmedienabgabevorrichtung zur Abgabe zumindest eines Kühlmediums in Richtung des Werkzeugs und / oder der Behandlungsstelle oder auf das Werkzeug und / oder die Behandlungsstelle aufweist. Die Lichtabgabevorrichtung umfasst bevorzugt zumindest ein optisches Halbleiterelement, insbesondere eine Leuchtdiode (LED). Des Weiteren ist die Behandlungsvorrichtung mit einer Steuervorrichtung zur alternierenden Abgabe von Licht und des zumindest einen Kühlmediums ausgestattet.

Die Steuervorrichtung bewirkt eine alternierende oder gepulste Abgabe des Lichts und zumindest eines Kühlmediums. Es werden somit abwechselnd ein oder mehrere Lichtpulse und anschließend ein oder mehrere Kühlmediumpulse von der Behandlungsvorrichtung abgegeben, die im Wesentlichen zeitlich aufeinander folgen. Diese zeitliche Abfolge von Licht und Kühlmedium bewirkt, dass während der Abgabe des Lichts kein oder nur wenig Kühlmedium, insbesondere kein oder nur wenig flüssiges Kühlmedium, im Luftraum zwischen der Behandlungsstelle und der Lichtabgabevorrichtung vorhanden ist, so dass das emittierte Licht im Wesentlichen ungestört von der Lichtabgabevorrichtung bis zur Behandlungsstelle und / oder dem Werkzeug gelangt.

Die Steuervorrichtung umfasst bevorzugt ein oder mehrere auf die Lichtabgabevorrichtung oder auf die Kühlmedienabgabevorrichtung einwirkende Steuer oder Stellelemente und einen damit verbundenen Mikrocontroller zur Ansteuerung der Steuer- oder Stellelemente. Bevorzugt weist die Steuervorrichtung ein in einer Medienleitung eines Kühlmediums angeordnetes Steuerventil auf, insbesondere ein Magnetventil, das vom Mikrocontroller zum Öffnen oder Schließen durch Steuersignale periodisch angesteuert wird. Die Pulsrate der Steuersignale oder des Steuerventils und somit auch der Kühlmedienabgabe beträgt zumindest in etwa 25 Hz, bevorzugt mehr als etwa 50 Hz, besonders bevorzugt etwa 75 Hz.

Gemäß einem Ausführungsbeispiel ist die Steuervorrichtung zur zeitlich sich zumindest teilweise überschneidenden Abgabe eines ersten Steuersignals zur gepulsten Abgabe des Lichts und eines zweiten Steuersignals zur gepulsten Abgabe des zumindest einen Kühlmediums ausgebildet. Das erste Steuersignal zur gepulsten Abgabe des Lichts wird dabei bevorzugt durch die für den Betrieb der Lichtabgabevorrichtung benötigte elektrische Energie, d.h. den elektrischen Strom, gebildet. Durch diese Ausgestaltung wird eine besonders exakte, alternierende Licht- und Kühlmedienabgabe ohne zeitliche Überschneidung erreicht. Die phasenverschobene Abgabe des ersten und des zweiten Steuersignals trägt insbesondere der Trägheit eines flüssigen Kühlmediums und des die gepulste Abgabe des flüssigen Kühlmediums veranlassenden Steuerventils Rechnung, die in einer verzögerten Abgabe des Kühlmediumpulses aus der Behandlungsvorrichtung resultiert. Im Vergleich dazu ist die Dauer zwischen der Abgabe des Steuersignals für die Lichtabgabe und der Abgabe eines Lichtpulses durch die Lichtabgabevorrichtung erheblich geringer. Durch die zeitlich sich zumindest teilweise überschneidenden Abgabe der beiden Steuersignale wird die Verzögerung zwischen der Abgabe des Steuersignals für die Kühlmediumabgabe und der Abgabe eines Kühlmediumpulses kompensiert. Dem gemäß erfolgt die Abgabe eines Kühlmedienpulses auf das Werkzeug und / oder die Behandlungsstelle phasenverschoben zur Abgabe des zweiten Steuersignals für die Kühlmediumabgabe.

Bevorzugt weist die Steuervorrichtung des Weiteren ein elektrisches oder elektronisches Schaltelement zur gepulsten Energieversorgung (Versorgung mit elektrischem Strom) der Lichtabgabevorrichtung auf. Die Pulsrate der Beleuchtungsvorrichtung liegt bevorzugt über der Flimmerfrequenz des menschlichen Auges und beträgt zumindest in etwa 25 Hz, besonders bevorzugt mehr als etwa 50 Hz, so dass für den Anwender der Eindruck einer kontinuierlichen Lichtabgabe entsteht.

Gemäß einem Ausführungsbeispiel weist die Steuervorrichtung des Weiteren zumindest ein Stellelement auf, über das die Dauer der Lichtabgabe der Lichtabgabevorrichtung und / oder die Dauer der Abgabe des zumindest einen Kühlmediums und / oder der Grad der überschneidenden Abgabe eines ersten Steuersignals zur gepulsten Abgabe des Lichts und eines zweiten Steuersignals zur gepulsten Abgabe des zumindest einen Kühlmediums einstellbar ist / sind.

Die Behandlungsvorrichtung umfasst bevorzugt ein mit einer Hand fassbares Handgriffelement, zum Beispiel ein medizinisches, insbesondere dentales, Hand- oder Winkelstück oder ein pistolenförmiges Griffstück, eine Antriebseinheit die zum Beispiel eine in Bewegung versetzbare Welle, Mitnehmer, Getriebe, elektrisch oder mit Druckgas betreibbare Motore, etc. aufweist, eine Energiequelle oder einen Anschluss an eine Energiequelle zur Energieversorgung der Antriebseinheit, der Beleuchtungsvorrichtung und der Steuervorrichtung, einen oder mehrere Anschlüsse an eine oder mehrere Medienquellen, insbesondere an eine Wasserversorgung und an eine Druckluftquelle, und Versorgungsleitungen zwischen dem Handgriffelement und der Energiequelle bzw. der zumindest einen Medienquelle. Die Steuervorrichtung ist entweder zur Gänze im Handgriffelement angeordnet oder es sind zumindest Teile davon, insbesondere ein Mikrocontroller und vom Anwender bedienbare Schalt- oder Stellelemente, außerhalb des Handgriffelements in einem eigenständigen Steuergerät angeordnet.

Die Beleuchtungsvorrichtung umfasst eine oder mehrere Leuchtdioden, die mit einer elektrischen und / oder elektronischen Steuereinheit zur Energieversorgung der Leuchtdioden verbunden sind, die insbesondere einen Transformator zur passenden Spannungsversorgung der Leuchtdiode aufweist. Die Steuereinheit ist bevorzugt als Teil der Steuervorrichtung ausgebildet. Die Leuchtdioden sind am Handgriffelement vorgesehen, zum Beispiel rund um das Werkzeug, und / oder sie sind vom Handgriffelement getrennt angeordnet, zum Beispiel in einer Überkopflampe oder in einer separaten, in den Mundraum einführbaren Beleuchtungseinheit. Umfasst die Beleuchtungsvorrichtung eine erste Beleuchtungseinheit am Handgriffelement und eine zweite davon getrennte Beleuchtungseinheit, so ist mit einer gepulsten Lichtabgabe beider Beleuchtungseinheiten eine besonders gute Sichtbarkeit für den Anwender erzielbar.

Das durch die Antriebseinheit in Bewegung versetzbare Werkzeug umfasst zum Beispiel einen rotierbaren Bohrer, eine vibrierende Sonde oder ein eine Hubbewegung durchlaufende Feile. Die Antriebseinheit umfasst entsprechende Elemente, die die vom jeweiligen Werkzeug benötigte Antriebsbewegung gegebenenfalls durch Umwandlung einer Antriebsbewegung in eine andere Antriebsbewegung zur Verfügung stellen.

Die Kühlmedienabgabevorrichtung umfasst eine oder mehrere Leitungen, die mit einer oder mehreren Kühlmediumquellen verbunden sind und zumindest einen Teil der Behandlungsvorrichtung durchsetzen. Die Leitungen münden an ihren der Behandlungsstelle zugewandten Enden in Abgabeöffnungen der Behandlungsvorrichtung, zum Beispiel in Öffnungen der Außenhülse des Handgriffelement, und / oder weisen derartige Abgabeöffnungen auf. Über die Abgabeöffnungen und gegebenenfalls damit verbundene Düsen wird das Kühlmedium auf das Werkzeug und / oder die Behandlungsstelle gerichtet abgegeben. Bevorzugt umfasst die Kühlmedienabgabevorrichtung ein Druckregelventil für das zumindest eine Kühlmedium, insbesondere für jenes oder jene Kühlmedien, die gepulst von der Behandlungsvorrichtung abgebbar sind, so dass das einem Stellelement der Steuervorrichtung zufließende Kühlmedium einen im Wesentlichen konstanten Druck aufweist. Damit ist eine besonders zuverlässige und konstante Pulsrate des Kühlmediums erreichbar.

Gemäß einem Ausführungsbeispiel sind durch die Kühlmedienabgabevorrichtung mehrere Kühlmedien förderbar, wobei die Steuervorrichtung zur alternierenden Abgabe von zumindest zwei dieser Kühlmedien, insbesondere Druckluft und Wasser, ausgebildet ist und wobei eine Mischeinheit zur Vermischung der zumindest zwei alternierend abgebbaren Kühlmedien und ein stromabwärts der Mischeinheit vorgesehenes Stellelement zur alternierenden Abgabe der vermischten Kühlmedien vorgesehen ist. Dieses Ausführungsbeispiel ist besonders Platz sparend, da für die Abgabe von zwei oder mehr Medien nur ein einziges, gemeinsames Stellelement, zum Beispiel ein Ventil, notwendig ist.

Gemäß einem alternativen Ausführungsbeispiel sind durch in getrennten Leitungen der Kühlmedienabgabevorrichtung mehrere Kühlmedien oder mehrere voneinander unabhängige Ströme eines Kühlmediums förderbar, wobei die Steuervorrichtung zur alternierenden Abgabe von zumindest zwei dieser Kühlmedien oder Kühlmedienströme ausgebildet ist und wobei jedem alternierend abgebaren Kühlmedium oder Kühlmediumsstrom zumindest ein Stellelement zur alternierenden Abgabe zugeordnet ist. Damit ist es in vorteilhafter Weise möglich, unterschiedliche Kühlmedien, insbesondere Druckluft und Wasser, mit unterschiedlichen Taktungen abzugeben, zum Beispiel einen Puls eines ersten Kühlmediums alternierend mit einem Lichtpuls, und anstelle oder gemeinsam mit jedem zweiten, dritten oder n-ten Puls des ersten Kühlmediums einen Puls eines zweiten Kühlmediums. Das gleiche gilt für zwei oder mehr Kühlmediumsströme eines Kühlmediums. Durch diese unterschiedliche Taktung wird zum Beispiel eine optimale Lösung für eine gute Sicht auf die Behandlungsstelle in Kombination mit einer ausreichenden Kühlung der Behandlungsstelle und mit einer effizienten Spülung der Behandlungsstelle durch die zusätzliche Abgabe des zweiten Kühlmediumsstroms erreicht. Die Abgabe der Kühlmedien oder Kühlmedienströme auf die Behandlungsstelle und / oder das Werkzeug erfolgt entweder über eigene, jedem Kühlmedium zugeordnete Abgabeöffnungen oder, nach dem Vermischen der Kühlmedien oder Kühlmedienströme in einer Mischeinheit, über gemeinsame Abgabeöffnungen.

Gemäß einem bevorzugten Ausführungsbeispiel sind durch die Kühlmedienabgabevorrichtung mehrere Kühlmedien förderbar, wobei zumindest ein Kühlmedium kontinuierlich auf das Werkzeug und / oder die Behandlungsstelle abgebbar ist und zumindest ein Kühlmedium alternierend mit dem Licht abgebbar ist. Besonders bevorzugt ist das kontinuierlich abgebbare Kühlmedium zum überwiegenden Teil aus einem Druckgas, insbesondere aus Druckluft, und das alternierend mit dem Licht abgebbare Kühlmedium zum überwiegenden Teil aus einer Flüssigkeit, insbesondere aus Wasser, gebildet. Der Vorteil dieses Ausführungsbeispiels liegt darin, dass das kontinuierlich abgegebene Kühlmedium, d.h. die Druckluft, das gepulst abgegebene Kühlmedium, d.h. das Wasser, von der Behandlungsstelle, dem Werkzeug und dem Raum über der Behandlungsstelle rasch entfernt oder wegbläst, so dass bei Abgabe des Lichtpulses kein oder nur sehr wenig die Ausbreitung des Lichts störendes Kühlmedium vorhanden ist und die Sicht für den Anwender auf die Behandlungsstelle oder das Werkzeug dadurch zusätzlich verbessert wird.

Bei den beiden zuletzt beschriebenen Ausführungsbeispielen ist es des Weiteren von Vorteil, jedem Kühlmedium eigene Abgabeöffnungen, über die es auf das Werkzeug und / oder die Behandlungsstelle abgebbar ist, zuzuordnen.

Ein medizinisches, insbesondere dentales, Behandlungsverfahren gemäß den vorstehend beschriebenen Ausführungsformen der Behandlungsvorrichtung umfasst den Schritt, dass alternierend Licht und zumindest ein Kühlmedium, insbesondere abwechselnd ein Lichtpuls und ein Kühlmediumpuls, auf das Werkzeug und / oder die Behandlungsstelle abgegeben werden. Bevorzugt werden von der Behandlungsvorrichtung zwei unterschiedliche Kühlmedien abgegeben, wobei ein Kühlmedium, insbesondere ein Druckgas (Druckluft) kontinuierlich abgegeben wird, und das andere Kühlmedium, insbesondere eine Flüssigkeit (Wasser), alternierend mit dem Licht abgegeben wird.

Die Erfindung wird nachfolgend anhand eines bevorzugten Ausführungsbeispiels und Bezug nehmend auf die beigefügten Zeichnungen erläutert:
Figur 1 zeigt ein Ausführungsbeispiel einer Behandlungsvorrichtung mit einem dentalen Winkelstück, einem Anschluss an eine erste Kühlmediumquelle, einem Anschluss an ein zweite Kühlmediumquelle und einer Steuervorrichtung zur alternierenden Abgabe von Licht und eines Kühlmediums.
Figur 2 zeigt ein alternatives Ausführungsbeispiel eines Stellelements zur alternierenden Abgabe eines Kühlmediums.

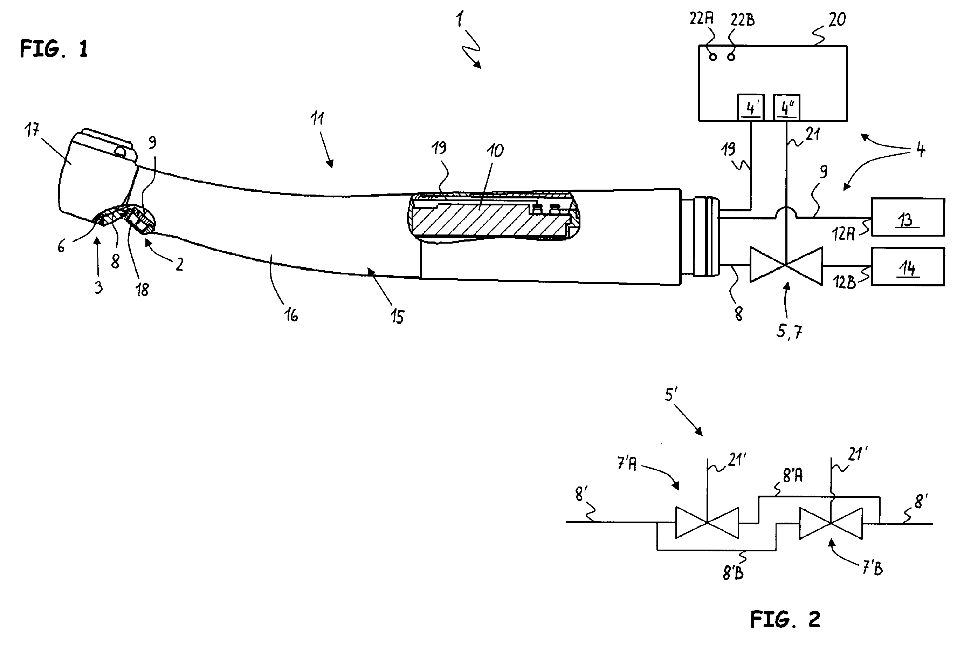

Die in Figur 1 dargestellte Behandlungsvorrichtung 1 umfasst ein mit einer Hand fassbares Handgriffelement 11, Anschlüsse 12A, 12B an eine Druckluftquelle 13 und an eine Wasserquelle 14, eine Lichtabgabevorrichtung 2, eine Kühlmedienabgabevorrichtung 3 und eine Steuervorrichtung 4 zur alternierenden Abgabe von Licht und zumindest eines Kühlmediums.

Das Handgriffelement 11 umfasst ein dentales Winkelstück mit einem gebogenen oder abgewinkelten Griffabschnitt 16 und einem dazu gewinkelt angeordneten Kopfabschnitt 17. Im Kopfabschnitt 17 ist eine Werkzeugaufnahme vorgesehen, in die ein Werkzeug lösbar einsetzbar ist sowie eine Werkzeuglösevorrichtung zum Lösen des Werkzeugs aus der Werkzeugaufnahme. Die Werkzeugaufnahme wird durch eine Antriebseinheit, die zum Beispiel ein durch Druckluft in Rotation versetzbares Laufrad, eine Schwingachse oder rotierbare Wellen und Zahnräder umfasst, in eine Arbeitsbewegung versetzt. Selbstverständlich ist es möglich, dass das Handgriffelement andere bekannte Ausgestaltungen aufweist und zum Beispiel als gerades Handstück oder als pistolenförmiges Handgriffelement ausgebildet ist. Des Weiteren umfasst der Begriff Handgriffelement 11 nicht nur jenen Teil der Behandlungsvorrichtung 1, der mit dem Werkzeug verbindbar ist, sondern auch damit verbundene oder verbindbare Zwischen- oder Anschlussstücke, Kupplungen, Adapter, Schlauchansätze usw.

Von den Anschlüsse 12A, 12B erstrecken sich eine Wasserleitung 8 und eine Luftleitung 9 durch die Behandlungsvorrichtung 1, insbesondere durch einen Versorgungsschlauch und das Handgriffelement 11, bis zu Medienabgabeöffnungen (nur eine Öffnung 6 ist erkennbar) in der Nähe des Werkzeugs bzw. in der Nähe der Werkzeugaufnahmeöffnung in der Außenhülse des Handgriffelements 1, durch die das Werkzeug in die Werkzeugaufnahme einführbar ist. Von den Medienabgabeöffnungen oder damit verbundenen Düsen oder Leitelementen strömen die Kühlmedien in den Luftraum über der Behandlungsstelle, in den Raum rund um das Werkzeug und in Richtung oder auf die Behandlungsstelle und das Werkzeug. Die beiden Medienleitungen 8, 9 und die Medienabgabeöffnungen 6 bilden einen Teil der Kühlmedienabgabevorrichtung 3.

Die Lichtabgabevorrichtung 2 umfasst eine Lichtquelle 18 zur Abgabe von sichtbarem Licht in Form zumindest eines optischen Halbleiterelements, insbesondere zumindest einer Leuchtdiode (LED), einen Steuerelektronik 10 zur Versorgung der Lichtquelle 18 mit der von der Lichtquelle benötigten elektrischen Energie sowie elektrische Leitungen 19 zur Verbindung der Lichtquelle 18 und der Steuerelektronik 10 mit einer Stromquelle. Befindet sich die Stromquelle außerhalb der Behandlungsvorrichtung, so ist ein weiterer Anschluss zur Verbindung der elektrischen Verbraucher der Behandlungsvorrichtung mit der Stromquelle vorgesehen.

Die zumindest eine LED ist in einer hermetisch verschlossenen Kapsel aufgenommen, die bevorzugt aus metallischen Bauteilen, Glas, Kunststoff oder Kunstharz hergestellt ist, so dass das Handgriffelement 11 gemeinsam mit der LED reinigbar ist, insbesondere desinfizierbar oder sterilisierbar. Die Kapsel mit der LED ist in einer Öffnung der Außenhülse des Handgriffelements 11 derart angeordnet, dass sie das von ihr erzeugte Licht in Richtung des Werkzeugs und / oder der Behandlungsstelle oder direkt auf das Werkzeug und / oder auf die Behandlungsstelle emittiert. Alternativ umfasst die Lichtabgabevorrichtung 2 einen Lichtleiter, über den das von der LED erzeugte Licht in Richtung des Werkzeugs und / oder der Behandlungsstelle oder direkt auf das Werkzeug und / oder auf die Behandlungsstelle abgegeben wird.

Auch die Steuerelektronik 10 ist, insbesondere wenn sie im Handgriffelement 11 aufgenommen ist, zum Schutz vor Verschmutzungen, Wasserdampf oder aggressiven Reinigungsmitteln hermetisch gekapselt, zum Beispiel durch ein Metall-, Kunststoff- oder Kunstharzgehäuse oder durch Vergießen mit einem aushärtbaren Vergussmaterial.

Die Steuervorrichtung 4 zur alternierenden Abgabe von Licht und zumindest eines Kühlmediums umfasst ein Steuergerät 20, in dem ein oder mehrere elektronische Schaltelemente oder Schaltkreise 4', 4" aufgenommen sind, ein oder mehrere mechanische Stellelemente 5 sowie elektrische Leitungen 19, 21 zur Verbindung der Schaltkreise 4', 4" mit den Stellelementen 5 oder zur Weiterleitung elektrischer Steuersignale.

Ein erster im Steuergerät 20 vorgesehener Schaltkreis 4' steuert die Lichtabgabe der Lichtabgabevorrichtung 2. Während der alternierenden Abgabe von Licht und einem Kühlmittel schaltet der Schaltkreis 4' die Stromversorgung der Lichtabgabevorrichtung 2, bevorzugt periodisch, ein und aus, so dass die Lichtquelle 18 abwechselnd mit elektrischem Strom versorgt wird oder nicht versorgt wird und dem gemäß abwechselnd Licht oder Lichtpulse emittiert oder nicht emittiert. Die Schaltfrequenz liegt bei zumindest 25 Hz, bevorzugt bei mehr als 50Hz, besonders bevorzugt bei etwa 75 Hz.

Anstelle den Schaltkreis 4' im Steuergehäuse 20 anzuordnen, ist es auch möglich, den Schaltkreis in die im Handgriffelement 11 angeordnete Steuerelektronik 10 zur Versorgung der Lichtquelle 18 zu integrieren. Genau so ist es umgekehrt möglich, die Steuerelektronik 10 in das Steuergerät 20 einzubauen.

Der zweite im Steuergerät 20 vorgesehener Schaltkreise 4" steuert die Abgabe der Kühlflüssigkeit, d.h. des Spraywassers, so dass das Spraywasser alternierend mit dem Licht auf die Behandlungsstelle und das Werkzeug abgegeben wird. Dazu ist der zweite Schaltkreis 4" über die Leitung 21 mit einem in der Wasserleitung 8 angeordneten Stellelement 5 verbunden, das als Steuerventil 7, insbesondere als Magnetventil, ausgebildet ist. Der zweite Schaltkreis 4" sendet Steuersignale an das Stellelement 5, um es derart zu öffnen oder zu schließen, dass das Wasser im Wesentlichen nur dann auf das Werkzeug und die Behandlungsstelle abgegeben wird, wenn die Lichtabgabevorrichtung 2 kein Licht auf das Werkzeug und die Behandlungsstelle abgibt.

Gemäß dem in Figur 1 dargestellten Ausführungsbeispiel ist das Stellelement 5 entfernt von der Öffnung 6, von der das Wasser abgegeben wird, angeordnet. Das Stellelement 5 kann im Handgriffelement 11, zum Beispiel im Bereich der Steuerelektronik 10, oder außerhalb des Handgriffelements 11 angeordnet sein, zum Beispiel in einer an das Handgriffelement 11 anschließenden Kupplung. Aufgrund der Trägheit des Steuerventils 7 sowie der Wassersäule in der Wasserleitung 8 zwischen dem Steuerventil 7 und der Medienabgabeöffnung 6 kommt es zu einer zeitlichen Verzögerung zwischen der Ansteuerung des Steuerventils 7 durch den zweiten Schaltkreise 4" und der tatsächlichen Abgabe von Wasser an der Öffnung 6. Um diese zeitliche Verzögerung auszugleichen und damit eine möglichst exakte, abwechselnde Abgabe von Licht und Wasser zu gewährleisten, ist die Steuervorrichtung 4 zur zeitlich sich zumindest teilweise überschneidenden Abgabe eines ersten Steuersignals zur gepulsten Abgabe des Lichts und eines zweiten Steuersignals zur gepulsten Abgabe des zumindest einen Kühlmediums ausgebildet. Als erstes Steuersignal zur gepulsten Abgabe des Lichts dient dabei bevorzugt die für den Betrieb der Lichtabgabevorrichtung benötigte elektrische Energie. Die Steuervorrichtung 4 leitet somit zumindest für einen kurzen Zeitraum gleichzeitig an die Lichtquelle 18 elektrische Energie und an das Steuerventil 7 ein Steuersignal zum Öffnen des Steuerventils 7.

Die Behandlungsvorrichtung 1 gemäß Figur 1 ist somit ausgebildet, alternierend Wasser oder Wasserpulse und Licht oder Lichtpulse abzugeben. Die über die Leitung 9 durch das Handgriffelement 11 geförderte Druckluft wird kontinuierlich während des gesamten Betriebs des Handgriffelements 11 über eine oder mehrere in der Figur 1 nicht dargestellte Druckluft-Abgabeöfnungen auf das Werkzeug, die Behandlungsstelle und den Luftraum über der Behandlungsstelle abgegeben. Diese eigenen Abgabeöffnungen für die Druckluft sind wie die Öffnungen 6 für das Wasser am Kopfabschnitt 17 des Handgriffelements 11 oder an einem daran angrenzenden Teil des Griffabschnitts 16 angeordnet. Auf jeden Fall befinden sich die Abgabeöffnungen für die Druckluft in der Nähe der Wasserabgabeöffnungen 6, so dass die kontinuierlich strömende Druckluft das Wasser und insbesondere den Wassernebel im Luftraum über der Behandlungsstielle wegbläst, um somit eine noch bessere Sicht auf die Behandlungsstelle zu ermöglichen.

Alternativ werden die Druckluft und das Wasser über dieselben Medienabgabeöffnungen 6 abgegeben. Dazu ist, zum Beispiel rund um das Werkzeug oder die Werkzeugaufnahmeöffnung, eine Abgabevorrichtung, insbesondere eine Sprayplatte, vorgesehen, in die sowohl die Wasserleitung 8 als auch die Luftleitung 9 münden. In der Abgabevorrichtung ist des Weiteren eine Mischeinheit oder Mischkammer vorgesehen, in der das Wasser und die Druckluft miteinander vermischt werden, um anschließend als Wasser-Luft-Gemisch oder Spray gemeinsam aus den Öffnungen der Abgabevorrichtung auszuströmen. Als Mischkammer kann insbesondere auch ein gemeinsames Leitungsstück in der Abgabevorrichtung dienen, durch das Wasser und die Druckluft gemeinsam fließen. Aufgrund der gepulsten Förderung des Wassers strömt somit ein kontinuierlich fließender Druckluftstrom durch die Leitung 9 in die Sprayplatte, in den - alternierend zur Lichtabgabe-Wasserpulse eingebracht werden. Gemäß diesem alternativen Ausführungsbeispiel ist somit die Mischkammer für die beiden Kühlmedien stromabwärts zum Stellelement 5 für das Wasser angeordnet.

Das Steuergerät 20 umfasst bevorzugt neben den beiden Schaltkreisen 4', 4" weitere elektrische oder elektronische Schalt- oder Steuerkreise, Speicher, Anzeigen, Stellelemente usw., die für den Betrieb der Behandlungsvorrichtung 1, der Antriebseinheit, insbesondere eines Elektromotors, oder des Handgriffelements 11 benötigt werden. So sind zum Beispiel in einem Speicher mehrere Betriebsprogramme mit unterschiedlichen, fixen oder über ein Stellelement 22A veränderbaren Werten bestimmter Parameter, zum Beispiel der maximalen Drehzahl oder des maximalen Drehmoments, hinterlegt. Über ein weiteres Stellelement 22B sind die Dauer der Lichtabgabe der Lichtabgabevorrichtung 2 und / oder die Dauer der Abgabe des zumindest einen Kühlmediums und / oder der Grad der überschneidenden Abgabe eines ersten Steuersignals zur gepulsten Abgabe des Lichts und eines zweiten Steuersignals zur gepulsten Abgabe des zumindest einen Kühlmediums einstellbar.

In Figur 2 ist schematisch ein alternatives Ausführungsbeispiel des in der Wasserleitung vorgesehenen Stellelements dargestellt. Es ist zu erkennen, dass sich die Wasserleitung 8' in zwei parallel verlaufende Zweige 8'A und 8'B teilt, so dass sich der Wasserstrom in zwei Teilströme aufteilt. In jedem der beiden Leitungszweige 8'A, 8'B ist ein über die Leitungen 21' vom Schaltkreis 4" (siehe Figur 1) ansteuerbares Ventil 7'A, 7'B, insbesondere ein Magnetventil, vorgesehen. Die beiden Ventile 7'A, 7'B sind parallel geschaltet, es fließt also jeweils ein Teilstrom des Kühlmediums durch eines der beiden Ventile 7'A, 7'B. Gleichzeitig sind die beiden Ventile 7'A, 7'B jedoch räumlich seriell oder hintereinander angeordnet. Nach den Ventilen 7'A, 7'B vereinigen sich die beiden Leitungszweige 8'A, 8'B wieder zu einer Leitung 8' und dem gemäß die beiden Teilströme wieder zu einem gemeinsamen Kühlmedienstrom.

Der Vorteil des Stellelements 5' liegt in der in Summe höheren Durchflussmenge an Kühlmedium und somit in der besseren Kühlung der Behandlungsstelle bei radial (bezogen auf die Längsachse des Handgriffelements 11) geringem Platzverbrauch im Vergleich zu einem einzigen, vor allem im Durchmesser größeren Ventil, durch das die selbe Durchflussmenge an Kühlmedium fließen kann.

Die Erfindung ist nicht auf die dargestellten und beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Medizinische, insbesondere dentale, Behandlungsvorrichtung (1) mit einer in Bewegung versetzbaren Antriebseinheit zum Antrieb eines mit der Antriebseinheit verbindbaren oder verbundenen, auf eine Behandlungsstelle einwirkenden Werkzeugs, einer Lichtabgabevorrichtung (2) zur Abgabe von Licht auf das Werkzeug und / oder die Behandlungsstelle und mit einer Kühlmedienabgabevorrichtung (3) zur Abgabe zumindest eines Kühlmediums auf das Werkzeug und / oder die Behandlungsstelle, **gekennzeichnet durch**
eine Steuervorrichtung (4) zur alternierenden Abgabe von Licht und des zumindest einen Kühlmediums.

2. Medizinische, insbesondere dentale, Behandlungsvorrichtung (1) nach Anspruch 1, **dadurch gekennzeichnet, dass**
durch die Kühlmedienabgabevorrichtung (3) mehrere Kühlmedien förderbar sind, wobei die Steuervorrichtung (4) zur alternierenden Abgabe von zumindest zwei dieser Kühlmedien ausgebildet ist und wobei eine Mischeinheit zur Vermischung der zumindest zwei alternierend abgebbaren Kühlmedien und ein stromabwärts der Mischeinheit vorgesehenes Stellelement (5, 5') zur alternierenden Abgabe der vermischten Kühlmedien vorgesehen ist.

3. Medizinische, insbesondere dentale, Behandlungsvorrichtung (1) nach Anspruch 1, **dadurch gekennzeichnet, dass**
durch die Kühlmedienabgabevorrichtung (3) mehrere Kühlmedien oder mehrere voneinander unabhängige Ströme eines Kühlmediums förderbar sind, wobei die Steuervorrichtung (4) zur alternierenden Abgabe von zumindest zwei dieser Kühlmedien oder Kühlmedienströme ausgebildet ist und wobei jedem alternierend abgebaren Kühlmedium oder Kühlmediumsstrom zumindest ein Stellelement (5, 5') zur alternierenden Abgabe zugeordnet ist.

4. Medizinische, insbesondere dentale, Behandlungsvorrichtung (1) nach Anspruch 1, **dadurch gekennzeichnet, dass**
durch die Kühlmedienabgabevorrichtung (3) mehrere Kühlmedien förderbar sind, wobei zumindest ein Kühlmedium kontinuierlich auf das Werkzeug und / oder die Behandlungsstelle abgebbar ist und zumindest ein Kühlmedium alternierend mit dem Licht abgebbar ist.

5. Medizinische, insbesondere dentale, Behandlungsvorrichtung (1) nach Anspruch 4, **gekennzeichnet, durch**
**das** kontinuierlich abgebbare Kühlmedium zum überwiegenden Teil aus einem Druckgas, insbesondere aus Druckluft, gebildet ist und dass das alternierend mit dem Licht abgebbare Kühlmedium zum überwiegenden Teil aus einer Flüssigkeit, insbesondere aus Wasser, gebildet ist.

6. Medizinische, insbesondere dentale, Behandlungsvorrichtung (1) nach Anspruch 4 oder 5, **gekennzeichnet durch**
eine Mischeinheit zur Vermischung des zumindest einen alternierend zum Licht abgebbaren Kühlmediums und des zumindest einen kontinuierlich abgebbaren Kühlmediums und **durch** ein stromaufwärts der Mischeinheit vorgesehenes Stellelement (5, 5') für das alternierend zum Licht abgebbare Kühlmedium.

7. Medizinische, insbesondere dentale, Behandlungsvorrichtung (1) nach einem der Ansprüche 3-5, **dadurch gekennzeichnet, dass**
jedem Kühlmedium zumindest eine eigene Abgabeöffnung (6) zugeordnet ist, über die es auf das Werkzeug und / oder die Behandlungsstelle abgebbar ist.

8. Medizinische, insbesondere dentale, Behandlungsvorrichtung (1) nach einem der vorhergehenden Ansprüche, **dadurch gekennzeichnet, dass**
die Kühlmedienabgabevorrichtung (3) zumindest eine Medienleitung (8, 8', 8'A. 8'B, 9) und die Steuervorrichtung (4) zumindest ein ansteuerbares, in der Medienleitung (8, 8', 8'A. 8'B, 9) angeordnetes Stellelement (5), insbesondere ein Steuerventil (7, 7'A, 7'B), umfasst.

9. Medizinische, insbesondere dentale, Behandlungsvorrichtung (1) nach Anspruch 8, **dadurch gekennzeichnet, dass**
mehrere Steuerventile (7'A, 7'B) vorgesehen sind, die von Teilströmen des zumindest einen Kühlmediums parallel durchfließbar sind und die räumlich seriell angeordnet sind.

10. Medizinische, insbesondere dentale, Behandlungsvorrichtung (1) nach einem der vorhergehenden Ansprüche, **dadurch gekennzeichnet, dass**
die Steuervorrichtung (4) ein elektrisches oder elektronisches Schaltelement (4') zur gepulsten Energieversorgung der Lichtabgabevorrichtung (2) aufweist.

11. Medizinische, insbesondere dentale, Behandlungsvorrichtung (1) nach einem der vorhergehenden Ansprüche, **dadurch gekennzeichnet, dass**
die Steuervorrichtung (4) zur zeitlich sich zumindest teilweise überschneidenden Abgabe eines ersten Steuersignals zur gepulsten Abgabe des Lichts und eines zweiten Steuersignals zur gepulsten Abgabe des zumindest einen Kühlmediums ausgebildet ist, wobei das erste Steuersignal bevorzugt die für den Betrieb der Lichtabgabevorrichtung benötigte elektrische Energie umfasst.

12. Medizinische, insbesondere dentale, Behandlungsvorrichtung (1) nach einem der vorhergehenden Ansprüche, **dadurch gekennzeichnet, dass**
die Kühlmedienabgabevorrichtung (3) ein Druckregelventil für das zumindest eine Kühlmedium umfasst, so dass das einem Stellelement (5, 5') der Steuervorrichtung (4) zufließende Kühlmedium einen im Wesentlichen konstanten Druck aufweist.

13. Medizinische, insbesondere dentale, Behandlungsvorrichtung (1) nach einem der vorhergehenden Ansprüche, **dadurch gekennzeichnet, dass**
die Behandlungsvorrichtung (1) ein mit einer Hand fassbares Handgriffelement (11) umfasst, wobei die Lichtabgabevorrichtung (2) am Handgriffelement (11) und / oder getrennt vom Handgriffelement (11), insbesondere in Form einer Überkopflampe, vorgesehen ist.

14. Medizinische, insbesondere dentale, Behandlungsvorrichtung (1) nach einem der vorhergehenden Ansprüche, **dadurch gekennzeichnet, dass**
die Steuervorrichtung (4) zumindest ein von einem Anwender bedienbares Stellelement (22A, 22B) aufweist, über das die Dauer der Lichtabgabe der Lichtabgabevorrichtung (2) und / oder die Dauer der Abgabe des zumindest einen Kühlmediums und / oder der Grad der überschneidenden Abgabe eines ersten Steuersignals zur gepulsten Abgabe des Lichts und eines zweiten Steuersignals zur gepulsten Abgabe des zumindest einen Kühlmediums einstellbar ist / sind.

15. Medizinische, insbesondere dentale, Behandlungsvorrichtung (1) nach einem der vorhergehenden Ansprüche, **dadurch gekennzeichnet, dass**
die Lichtabgabevorrichtung (2) zumindest ein optisches Halbleiterelement umfasst.
